# EUROPÄISCHE PATENTSCHRIFT

(11) **EP 0 982 370 B1**
(45) Veröffentlichungstag und Bekanntmachung des Hinweises auf die Patenterteilung: **20.12.2000**
(21) Anmeldenummer: 99112749.9
(22) Anmeldetag: 01.07.1999
(51) Int. Cl.: C08L 83/04, C08K 5/00, C07F 15/00

(54) **Härtbare Organopolysiloxanmassen**
Curable polysiloxane compositions
Compositions de polysiloxane durcissables

(30) Priorität: 20.08.1998 DE 19837855
(43) Veröffentlichungstag der Anmeldung: 01.03.2000
(73) Patentinhaber: Wacker-Chemie GmbH, 81737 München (DE)
(72) Erfinder: Fehn, Armin, Dr., 84547 Emmerting (DE); Achenbach, Frank, Dr., 84359 Simbach/Inn (DE); Dietl, Stefan, Dr., 84489 Burghausen (DE)
(74) Vertreter: Budczinski, Angelika

(56) Entgegenhaltungen:
- EP-A- 0 182 611
- EP-A- 0 638 604
- FR-A- 2 750 349
- US-A- 4 256 616
- US-A- 4 645 815
- US-A- 5 328 974

## Beschreibung

Die vorliegende Erfindung betrifft thermisch durch Hydrosilylierung vernetzende Siliconmassen, Verfahren zu deren Herstellung sowie deren Verwendung.

Additionsvernetzende Siliconmassen vernetzen durch Reaktion aliphatisch ungesättigter Gruppen mit Si-gebundenem Wasserstoff (Hydrosilylierung) in Gegenwart eines Katalysators, typischerweise einer Platin-Verbindung. Aufgrund der Tatsache, daß bei gleichzeitigem Vorliegen der essentiellen Bestandteile die Vernetzungsreaktion einsetzt, werden additionsvernetzende Siliconmassen bisher nahezu ausschließlich als zweikomponentige Formulierungen, hergestellt, wobei die Zusammensetzung der einzelnen Komponenten so beschaffen ist, daß erst nach deren Vermischen alle drei essentiellen Bestandteile zusammen vorliegen. Üblicherweise enthält eine der Komponenten das alkenylfunktionelle Polyorganosiloxan und den Platin-Katalysator, die andere Komponente den SiH-funktionellen Vernetzer ggf. in Kombination mit dem alkenylfunktionellen Polyorganosiloxan. Nach Vermischen der einzelnen Komponenten kann die vollständige Aushärtung zum Siliconelastomer bei Raumtemperatur erfolgen, wird jedoch üblicherweise bei erhöhter Temperatur durchgeführt.

Das Zwei-Komponenten-System bei additionsvernetzbaren Siliconmassen ist mit zahlreichen Nachteilen verbunden, wie etwa Logistik, die hohe Kontaminationsgefahr durch Platinspuren und die Tatsache eines zusätzlichen Mischungsschrittes. Nach Vermischen der Komponenten wird zwar eine gebrauchsfertige Masse erhalten, doch weist diese nur eine eng begrenzte Topfzeit bei Raumtemperatur auf. Dies macht einerseits eine sich rasch anschließende Verarbeitung erforderlich, andererseits auch ein häufiges Reinigen der Vorratsbehälter, Dosieranlagen, Verarbeitungsmaschinen etc., da das z.B. durch Rückvermischung oder Wandhaftung verbleibende Material schließlich vergelt.

Aufgrund der genannten Nachteile hat es nicht an Versuchen gefehlt, auch additionsvernetzende Siliconmassen als einkomponentige Formulierung (1K-System) zur Verfügung zu stellen. Da im Fall eines 1K-Systems alle zur Vernetzung notwendigen Bestandteile gemeinsam vorliegen, besteht das Problem grundsätzlich darin, ein vorzeitiges Einsetzen der Vernetzungsreaktion, die normalerweise auch bei Raumtemperatur abläuft, anderweitig zu unterbinden. Möglichkeiten zur gezielten Einstellung (Verlängerung) der Topfzeit einer additionsvernetzenden Masse sind hinlänglich bekannt, z.B. durch die Verwendung von Inhibitoren, welche die Aktivität des Platinkatalysators bei Raumtemperatur erheblich herabzusetzen vermögen, wie beispielsweise Phosphorverbindungen in Kombination mit Peroxiden gemäß US-A-4 329 275 oder Azodicarbonylverbindungen gemäß EP-A- 490 523. Durch Art und Gehalt solcher Inhibitoren kann die Topfzeit zwar an sich beliebig verlängert werden, doch ist mit zunehmender Topfzeit auch eine nachteilige Beeinflussung des Vernetzungsverhaltens untrennbar verbunden. Dies gilt insbesondere dann, wenn die Topfzeit durch hohe Inhibitorgehalte auf mehrere Monate ausgedehnt wird: erhöhte Anspringtemperatur, niedrige Vernetzungsgeschwindigkeit bis hin zur Untervernetzung sind die Folge. Eine davon grundsätzlich verschiedene, weitere Möglichkeit besteht darin, den Platinkatalysator in einem feinteiligen Material zu verkapseln, welches erst bei erhöhter Temperatur das Platin freisetzt. Dies kann beispielsweise durch Mikroverkapselung des Platinkatalysators mit einem thermoplatischen Siliconharz oder einem organischen Thermoplast erfolgen, wie etwa in EP-A-363 006 beschrieben, was jedoch relativ aufwendig ist. Eine dritte Möglichkeit besteht darin, als Katalysator spezielle Platin-Komplexe auszuwählen, deren Aktivität so beschaffen ist, daß zwar bei erhöhter Temperatur die Hydrosilylierungsreaktion hinreichend schnell abläuft, bei Raumtemperatur jedoch in solch geringem Maße, daß Topfzeiten von mehreren Monaten erzielt werden. Derartige Platin-Komplexe enthaltende additionsvernetzende Massen wurden beispielsweise in EP-A-583 159 und DE-A-36 35 236 beschrieben. Obgleich die beschriebenen Massen deutlich verbesserte Topfzeiten bei teils hinreichend hohen Vernetzungsgeschwindigkeiten aufweisen, besteht weiterhin Bedarf, durch leistungsfähigere Platinkatalysatoren die Topfzeit und Vernetzungsgeschwindigkeit einkomponentig formulierter, additionsvernetzender Massen zu verbessern, ohne die o.g. Nachteile in Kauf nehmen zu müssen. Diese Aufgabe wird durch die vorliegende Erfindung gelöst.

Im Rahmen der vorliegenden Erfindung sollen von dem Begriff Organopolysiloxane sowohl polymere, oligomere wie auch dimere Siloxane mitumfaßt werden.

Gegenstand der vorliegenden Erfindung sind härtbare Organopolysiloxanmassen, enthaltend
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die SiC-gebundene Reste mit aliphatischen Kohlenstoff-Kohlenstoff-Mehrfachbindungen und Si-gebundene Wasserstoffatome aufweisen, und
(D) Platinkatalysator, ausgewählt aus der Gruppe bestehend aus

   (PR² ₃)₂Pt(-C≡C-R³)₂ (III),

   (R² ₂P-R⁴-PR² ₂)Pt(-C≡C-R³)₂ (IV)

   und

   H-C≡C-R⁵-C≡C-[-Pt(PR² ₃)₂-C≡C-R⁵-C≡C-]ₑ-H (V),

   wobei
   - R²: gleich oder verschieden sein kann und einwertige, gegebenenfalls substituierte Kohlenwasserstoffreste mit 1 bis 24 Kohlenstoffatomen, Halogenatome, Wasserstoffatom, Hydroxyreste, -CN oder -SCN bedeutet, die entweder direkt oder über Sauerstoff, Stickstoff oder Schwefel an Phosphor gebunden sind,
   - R³: gleiche oder verschiedene einwertige, gegebenenfalls substituierte Kohlenwasserstoffreste mit 1 bis 24 Kohlenstoffatomen,
   - R⁴: gleiche oder verschiedene zweiwertige, gegebenenfalls substituierte Kohlenwasserstoffreste mit bis 14 Kohlenstoffatomen,
   - R⁵: gleiche oder verschiedene zweiwertige, gegebenenfalls substituierte Kohlenwasserstoffreste mit 1 bis 24 Kohlenstoffatomen und
   - e: eine ganze Zahl größer oder gleich 1 bedeutet.

Falls es sich bei den Resten R², R³, R⁴ und R⁵ um substituierte Kohlenwasserstoffreste handelt, sind als Substituenten Halogenatome, wie F, Cl, Br und J, Cyanoreste sowie Gruppen -OR⁶ bevorzugt, wobei R⁶ gleich oder verschieden sein kann und Wasserstoffatom oder einen einwertigen Kohlenwasserstoffrest mit 1 bis 20 Kohlenstoffatomen bedeutet.

Bei den erfindungsgemäßen Zusammensetzungen kann es sich um Einkomponenten-Organopolysiloxanmassen wie auch um Zweikomponenten-Organopolysiloxanmassen handeln. In letzterem Fall können die beiden Komponenten der erfindungsgemäßen Massen alle Bestandteile in beliebiger Kombination enthalten, im allgemeinen mit der Maßgabe, daß eine Komponente nicht gleichzeitig Siloxane mit aliphatischer Mehrfachbindung, Siloxane mit Si-gebundenem Wasserstoff und Katalysator, also im wesentlichen nicht gleichzeitig die Bestandteile (A), (B) und (D) bzw. (C) und (D), enthält. Vorzugsweise handelt es sich bei den erfindungsgemäßen Zusammensetzungen um Einkomponenten-Massen.

Die in den erfindungsgemäßen Massen eingesetzten Verbindungen (A) und (B) bzw. (C) werden bekanntermaßen so gewählt, daß eine Vernetzung möglich ist. So weist beispielsweise Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den obengenannten Verhältnissen aufweist.

Bei der erfindungsgemäß eingesetzten Verbindung (A) kann es sich um auch siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln. Beispiele für organische Verbindungen, die in den erfindungsgemäßen Massen als Komponente (A) eingesetzt werden können, sind 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, -2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5) und 4,5-Dimethyl-4,5-diethyl-octadien(1,7), N,N'-Methylen-bis-(acrylsäureamid), 1,1,1-Tris(hydroxymethyl)-propan-triacrylat, 1,1,1-Tris(hydroxymethyl)-propantrimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykol Diacrylat, Polyethylenglykol Dimethacrylat, Poly-(propylenglykol)methacrylat.

Vorzugsweise enthalten die erfindungsgemäßen Siliconmassen als Bestandteil (A) jedoch eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindung (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der Formel

RₐR¹ _{b}SiO_{(4-a-b)/2} (I)

eingesetzt, wobei
R gleich oder verschieden sein kann und einen von aliphatischen Kohlenstoff-Kohlenstoff-Mehrfachbindungen freien, organischen Rest bedeutet,
R¹ gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder 2 ist
mit der Maßgabe, daß die Summe a + b kleiner oder gleich 3 ist und. mindestens 2 Reste R¹ je Molekül vorliegen.

Bei Rest R kann es sich um ein- oder mehrwertige Reste handeln, wobei die mehrwertigen Reste, wie bivalente, trivalente und tetravalente Reste, dann mehrere, wie etwa zwei, drei oder vier, Siloxy-Einheiten der Formel (I) miteinander verbinden.

R umfaßt die einwertigen Reste -F, -Cl, -Br, -OR⁶, -CN, -SCN, -NCO, -NO₂ und SiC-gebundene, gegebenenfalls substituierte Kohlenwasserstoffreste, die mit Sauerstoffatomen oder der Gruppe -C(O)- unterbrochen sein können, sowie zweiwertige, beidseitig gemäß Formel (I) Si-gebundene Reste.

Falls es sich bei Rest R um SiC-gebundene, substituierte Kohlenwasserstoffreste handelt, sind als Substituenten Halogenatome, phosphorhaltige Reste, Cyanoreste, -OR⁶, -NR⁶-, -NR⁶₂, -NR⁶-C(O)-NR⁶₂, -C(O)-NR⁶₂, -C(O)-R⁶, -C(O)OR⁶, -SO₂-Ph und -C₆F₅ mit R⁶ gleich der obengenannten Bedeutung und Ph gleich Phenylrest bevorzugt.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele- für substituierte Reste R sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, - (CH₂)ₙ-N(R⁶)C(O)NR⁶₂, -(CH₂)ₙ-C(O)NR⁶₂, -(CH₂)ₙ-C(O)R⁶, -(CH₂)ₙ-C(O)OR⁶, (CH₂)ₙ-C(O)NR⁶₂, -(CH₂)ₙ-C(O)- (CH₂)ₘ-C(O)CH₃, -(CH₂)ₙ-O-CO-R⁶, - (CH₂)ₙ-NR⁶- (CH₂)ₘ-NR⁶₂, - (CH₂)ₙ-O- (CH₂)ₘ-CH(OH)-CH₂OH, - (CH₂)ₙ- (OCH₂CH₂)ₘ-OR⁶, -(CH₂)ₙ-SO₂-Ph und -(CH₂)ₙ-O-C₆F₅, wobei R⁶ eine oben dafür angegebene Bedeutung hat, n und m gleiche oder verschiedene ganze Zahlen zwischen 0 und 10 sind und Ph den Phenylrest bezeichnet.

Beispiele für R gleich zweiwertige, beidseitig gemäß Formel (I) Si-gebundene Reste sind solche, die sich von den voranstehend für Rest R genannten einwertigen Beispiele dadurch ableiten, daß eine zusätzliche Bindung durch Substitution eines Wasserstoffatoms erfolgt. Beispiele für derartige Reste sind -(CH₂)ₙ-, -CH(CH₃)-, -C(CH₃)₂-, -CH(CH₃)-CH₂-, -CH(Ph)-CH₂-, -C(CF₃)₂-, - (CH₂)ₙ-C₆H₄- (CH₂)ₙ-, -(CH₂)ₙ-C₆H₄-(CH₂)ₙ-, -(CH₂O)ₘ-, -(CH₂CH₂O)ₘ-, -(CH₂)ₙ-Oₓ-C₆H₄-SO₂-C₆H₄-Oₓ-(CH₂)ₙ-, wobei x 0 oder 1 ist, m und n die voranstehend genannte Bedeutung haben sowie Ph gleich Phenylrest ist.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R¹ kann es sich um beliebige, einer Anlagerungsreaktion (Hydrosilylierung) mit einer SiH-funktionellen Verbindung zugängliche Gruppen handeln.

Falls es sich bei Rest R¹ um SiC-gebundene, substituierte Kohlenwasserstoffreste handelt, sind als Substituenten Halogenatome, Cyanoreste und -OR⁶ bevorzugt, wobei R⁶ die obengenannte Bedeutung hat.

Bevorzugt handelt es sich bei Rest R¹ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Mowicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R¹R₂SiO_{1/2}, R¹RSiO_{2/2} und R₂SiO_{2/2} zusammengesetzt, wobei R und R¹ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R¹SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa^{.}s, besonders bevorzugt von 0,1 bis 100 000 Pa^{.}s, jeweils bei 25°C.

Als Organosiliciumverbindung (B) können alle hydrogenfunktionelle Organosiliciumverbindungen eingesetzt werden, die auch bisher in additionsvernetzbaren Massen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der Formel

R_{c}H_{d}SiO_{(4-c-d)/2} (II)

eingesetzt, wobei
R gleich oder verschieden sein kann und die oben angegebene Bedeutung hat,
c 0, 1, 2 oder 3 ist und
d 0, 1 oder 2 ist,
mit der Maßgabe, daß die Summe von c + d kleiner oder gleich 3 ist und mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiH-funktioneller Verbindungen, wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Silicongesamtmassen enthalten, daß das Molverhältnis von SiH-Gruppen zu aliphatisch ungesättigten Gruppen bei 0,1 bis 20, besonders bevorzugt zwischen 1,0 und 5,0, liegt.

Die erfindungsgemäß eingesetzten Komponenten (A) und (B) sind. handelsübliche Produkte bzw. nach in der Chemie gängigen Verfahren herstellbar.

Anstelle von Komponente (A) und (B) können die erfindungsgemäßen Massen Organopolysiloxane (C), die aliphatische Kohlenstoff-Kohlenstoff-Mehrfachbindungen und Si-gebundene Wasserstoffatome aufweisen, enthalten, was jedoch nicht bevorzugt ist.

Falls Siloxane (C) eingesetzt werden, handelt es sich vorzugsweise um solche aus Einheiten der Formel

R_{f}SiO_{4-f/2}, R_{g}R¹SiO_{3-g/2} und RₕHSiO_{3-h/2},

wobei
R und R¹ die oben dafür angegebene Bedeutung haben,
f 0, 1, 2 oder 3 ist,
g 0, 1 oder 2 ist und
h 0, 1 oder 2 ist,
mit der Maßgabe, daß je Molekül mindestens 2 Reste R¹ und mindestens 2 Si-gebundene Wasserstoffatome vorliegen.

Beispiele für Organopolysiloxane (C) sind solche aus SiO_{4/2}-, R₃SiO_{1/2}-, R₂R¹SiO_{1/2}- und R₂HSiO_{1/2}-Einheiten, sogenannte MQ-Harze, wobei diese Harze zusätzlich RSiO_{3/2}- und R₂SiO-Einheiten enthalten können, sowie lineare Organopolysiloxane im wesentlichen bestehend aus R₂R¹SiO_{1/2}-, R₂SiO- und RHSiO-Einheiten mit R und R¹ gleich der obengenannten Bedeutung.

Die Organopolysiloxane (C) besitzen vorzugsweise eine durchschnittliche Viskosität von 0,01 bis 500 000 Pa^{.}s, besonders bevorzugt 0,1 bis 100 000 Pa^{·}s, jeweils bei 25°C.

Organopolysiloxane (C) sind nach in der Chemie gängigen Methoden herstellbar.

Bevorzugt handelt es sich bei e um eine ganze Zahl von 1 bis 50, wobei eine ganze Zahl von 1 bis 10 besonders bevorzugt ist.

Der erfindungsgemäß eingesetzte Platin-Katalysator (D) der allgemeinen Formeln (III), (IV) oder (V) weist eine annähernd quadratisch-planare Liganden-Umgebung am Platin auf, weshalb cis/tans-Isomere möglich sind. Sowohl die cis- als auch die trans-Verbindungen sind Bestandteil dieser Erfindung.

Beispiele für die Phosphorverbindungen PR²₃ sind Trialkylphosphane, wie Trimethylphosphan, Triethylphosphan, Tripropylphosphan, Triisopropylphosphan, Tri-n-butylphosphan, Tri-tert-butylphosphan, Tricyclohexylphosphan und dergleichen; Arylphosphane, wie Triphenylphosphan, Tribenzylphosphan, Dimethylphenylphosphan, Diethylphenylphosphan, Dicyclohexylphenylphosphan, Dichlorphenylphosphan, Methyldiphenylphosphan, Ethyldiphenylphosphan, Diphenylpropylphosphan, Isopropenyldiphenylphosphan, Butyldiphenylphosphan, Phenylphosphan, Diphenyltolylphosphan, Tri-o, m-, und p-tolylphosphan. Ebenso können beliebige Phosphite als PR²₃ eingesetzt werden, wie zum Beispiel Trialkylphosphite, wie Trimethylphosphit, Triethylphosphit, Triisopropylphosphit, Tri-n-butylphosphit, Tri-tert-butylphosphit, Triisodecylphosphit, Tris-(tridecyl)-phosphit und dergleichen; Arylphosphite, wie Triphenylphosphit, Tri-o-, m-, und p-tolylphosphit, Tris-(isopropylphenyl)-phosphit, Tris-(tert.-butylphenyl)-phosphit, Tris- (2,4-di-tert.-butylphenyl)-phosphit, Tris-(2,6-dimethylphenyl)-phosphit, Tris-(nonylphenyl)phosphit, (nonylphenyl)phosphit, Benzyldiethylphosphit und dergleichen; Phosphinigsäureester, wie Diphenylphosphinigsäuremethylster, Diphenylphosphinigsäureethylester, Diphenylphosphinigsäurephenylester und dergleichen; Phosphonigsäureester, wie Benzolphosphonigsäuredimethylester, Benzolphosphonigsäurediethylester, Benzolphosphonigsäurediphenylester, Ethylphosphonigsäuredimethylester, Benzolphosphonigsäureethylester und dergleichen; substituierte Derivate der vorerwähnten Reste, wie Diphenyl(pentahalogen-phenyl)phosphan, Tris- (chlorphenyl) -phosphan, Tris-(fluorphenyl)-phosphan Bis-(pentahalogenphenyl)phenylphosphan, Tris-(pentahalogenphenyl)-phosphan, Tris-(2-chlorethyl)-phosphit, Tris- (2,2,2-trifluorethyl)phosphit, Tris-(chlorphenyl)-phosphit, Tris-(2-cyanoethyl) phosphan und dergleichen.

Beispiele für die Phosphorverbindung R²₂P-R⁴-PR²₂ sind Bis-(diphenylphosphino) methan, 1,2-Bis-(dimethylphosphino) -ethan, 1,3-Bis(diphenylphosphino)-propan, 1,2-Bis(diphenylphosphino)-propan, cis-1,2-Bis-(diphenylphosphino) -ethylen, Pyrophosphorigsäuretetraethylster, Pyrophosphorigsäuretetrabenzylester und dergleichen.

R³ ist festgelegt durch das verwendete Alkin H-C≡C-R³. Beispiele für die Alkine sind Acetylen, (Trimethylsilyl)-acetylen, (Triethylsily)-acetylen, Alkine mit Alkylgruppen wie 1-Propin, 1-Butin, 3,3-Dimethyl-1-Butin 1-Pentin, 1-Hexin, Cyclohexylacetylen, 1-Heptin, 1-Octin, 1-Nonin, 1-Decin, 1-Dodecin und dergleichen; Alkine mit Alkengruppen wie 2-Methyl-1-buten-3-in, 1-Ethinylcyclohexen, Monovinylacetylen und dergleichen; OH-substituierte Alkine wie Propargylalkohol, 3-Butin-2-ol, 2-Methyl-3-butin-2-ol, 3-Methyl-1-pentin-3-ol, 4-Pentin-1-ol, 4-Pentin-2-ol, 4-Pentin-3-ol, 5-Hexin-1-ol, 3,5-Dimethyl-1-hexin-3-ol, 1-Ethinyl-1-cyclohexanol, 3-Nonin-1-ol, 1-Octin-3-ol und dergleichen; Alkine mit aromatischen Gruppen, wie Phenylacetylen, 4-Ethinyltoluol, 3-Phenyl-1-propin, 2-Phenyl-3-Butin-2-ol und dergleichen; Alkine mit Ether-Gruppen, wie Alkylether der oben genannten OH-substituierten Alkine, Ethylethinylether, Methylpropargylether und dergleichen; Alkine mit Estergruppen wie Propiolsäuremethylester, Propiolsäureethylester, 4-Pentinsäuremethylester, Acetaldehydethyl-propargylacetal und dergleichen; Alkine mit Amino-Gruppen, wie Propargylamin, 1-Ethinylcyclohexylamin, 1,1-Dimethylpropargylamin, N-Methylpropargylamin, N,N-Dimethylpropargylamin, N-Benzyl-N-methylpropargylamin, 2-Ethinylpyridin und dergleichen; Halogensubstituierte Alkine, wie Propargylchlorid, Propargylbromid, 5-Chlor-1-pentin und dergleichen.

Beispiele für das Alkin H-C≡C-R⁵-C≡C-H sind 1,3-Butadiin, 1,4-Pentadiin, 1,5-Hexadiin, 1,6-Heptadiin, 1,7-Octadiin, 1,8-Nonadiin, Diethinylbenzol, Dipropargylamin, Dipropargylether, 9,10-Diethinylanthracen, Diethinyldimethylsilan, 1,3-Diethinyl-1,1,3,3-tetramethyldisiloxan, 1,2- Diethinyl-1,1,2,2-tetramethyldisilan, Polydimethysiloxane mit Ethinyl-Endgruppen und dergleichen. Die Herstellung solcher Polydimethylsiloxane ist allgemein bekannt und z.B. von O.G. Yarosh et al. in Izv.Akad. Nauk.SSSR, Ser. Khim. (1972), 2541-4 beschrieben.

Bis (alkinyl) bis (phosphan)platin-Verbindungen und Verfahren zu ihrer Herstellung sind dem Fachmann hinlänglich bekannt. Die Darstellung von Platinverbindungen der Formel (III) werden zum Beispiel von H.D. Empsall, B.L. Shaw, A.J. Stringer, J.Organomet..Chem. (1975), 94, 131-138, M.V. Russo, A. Furlani, J.Organomet. Chem. (1979), 165, 101-105, I. Collamati, A. Furlani, J.Organomet.Chem. (1969), 17, 457-461, A.Furlani, P.Bicev, M.V.Russo, P.Carusi, J.Organomet.Chem. (1971) 29, 321-327, K. Sonogashira et al., J.Organomet.Chem. (1978) 145, 101-108, A. Furlani, P. Carusi, M.V. Russo, J.Organomet.Chem. (1976), 116, 113-122 und A. Furlani et al., J.C.S.Dalton (1984) 2197-2206, beschrieben. Die Darstellung von Platinverbindungen der Formel (IV) werden z.B. von K.Sonogashira, S. Takahashi, N. Hagihara, Macromolecules (1977) 879-880, und S. Kotani, K. Shiina, K. Sonogashira, Appl.Organomet.Chem. (1991), 5, 417-425, beschrieben. Die Darstellung von Platinverbindungen der Formel (V) werden z.B. von J.F. Almeida, A. Pidcock, J.Organomet.Chem. (1981) 209, 415-423, und J. Fornies, M.A. Gomez-Saso, E. Lalinde, F. Martinez, M.T. Moreno Organometallics (1992), 11, 2873-2883, beschrieben. Erfindungsgemäß eingesetzte Platinkomplexe, die noch nicht explizit beschrieben sind, lassen sich analog der in den oben zitierten Literaturstellen angegebenen Methoden herstellen.

Bei dem erfindungsgemäß eingesetzten Platinkatalysator (D) handelt es sich bevorzugt um Bis(alkinyl)bis(triphenylphosphan)-platinkomplexe-, wobei trans-(Ph₃P)₂Pt [-C≡CC₆H₁₀(OH)]₂, trans-(Ph₃P)₂Pt [-C≡C-Ph]₂ und trans-(Ph₃P)₂Pt (-C≡C-SiMe₃)₂ besonders bevorzugt sind.

Als erfindungsgemäß eingesetzter Platinkatalysator (D) kann eine Verbindung oder ein Gemisch von Verbindungen aus (D) verwendet werden.

Die Menge des erfindungsgemäß eingesetzten Platinkatalysators (D) richtet sich nach der gewünschten Vernetzungsgeschwindigkeit und der jeweiligen Verwendung sowie ökonomischen Gesichtspunkten. Die erfindungsgemäßen Massen enthalten Platinkatalysatoren (D) in solchen Mengen, daß ein Platingehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der Masse, resultiert.

Außer den Komponenten (A) bis (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind pyrogene oder gefällte Kieselsäuren mit BET-Oberflächen von mindestens 50 m²/g sowie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.-%, vorzugsweise bei bis 50 Gew.-%.

Die erfindungsgemäße Siliconkautschukmasse kann wahlweise als Bestandteil (F) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A), (B) und (C) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststofffasern, Kunststoffpulver, Metallstäube, Farbstoffe, Pigmente usw.

Enthalten sein können des weiteren Zusätze (G), die der gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen -Gruppen und/oder R₂vinylSiO_{1/2}-Endgruppen, wie Divinyltetramethyldisiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze (G) hängt von ihrer chemischen Struktur ab, so daß sie individuell bestimmt werden muß.

Der Inhibitorgehalt der erfindungsgemäßen Massen beträgt vorzugsweise 0 bis 50 000 ppm, besonders bevorzugt 0 bis 1 500 ppm, insbesondere 5 bis 600 ppm.

Insbesondere enthalten die erfindungsgemäßen Massen keine über die Komponenten (A) bis (G) hinausgehenden Bestandteile.

Die erfindungsgemäßen Organoplysiloxanmassen können, falls erforderlich, in Flüssigkeiten gelöst, suspendiert oder emulgiert werden.

Die Herstellung der erfindungsgemäßen Organopolysiloxanmassen kann nach bekannten Verfahren erfolgen, wie beispielsweise durch gleichmäßige Vermischung der einzelnen Komponenten. Die Reihenfolge dabei ist beliebig, vorzuziehen ist jedoch die gleichmäßige Vermischung des Platinkatalysators (D) mit einer Mischung aus (A), (B), gegebenenfalls (E), (F) und (G). Der erfindungsgemäß eingesetzte Platinkatalysator (D) kann dabei als Festsubstanz oder als Lösung - in einem geeigneten Lösungsmittel gelöst - oder als Batch - gleichmäßig mit einer geringen Menge (A) oder (A) mit (E) vermischt - eingearbeitet werden.

Bei den erfindungsgemäß eingesetzten Komponenten (A) bis (G) kann es sich jeweils um eine einzelne Art einer solchen Komponente, wie auch um ein Gemisch aus mindestens zwei verschiedenen Arten einer solchen Komponente handeln.

Die erfindungsgemäßen durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. vorzugsweise handelt es sich dabei um Temperaturen von 100 bis 200°C, besonders bevorzugt von 130 bis 190°C, und einem Druck von 900 bis 1100 hPa. Es können aber auch höhere oder niedrigere Temperaturen und Drücke angewendet werden.

Ein weiterer Gegenstand der vorliegenden Erfindung sind Formkörper hergestellt durch Vernetzung der erfindungsgemäßen Massen.

Die erfindungsgemäßen Massen sowie die erfindungsgemäß daraus hergestellten Vernetzungsprodukte können für alle Zwecke eingesetzt werden, für die auch bisher zu Elastomeren vernetzbare Organopolysiloxanmassen bzw. Elastomere verwendet wurden, wie z.B. als Einbettungsmassen für elektrische oder elektronische Vorrichtungen, als Abformmassen, Beschichtungsmassen oder zur Herstellung von Formkörpern, z.B. im Spritzgußverfahren, Vakuumextrusionsverfahren, Extrusionsverfahren, Formgießen und Formpressen.

Die erfindungsgemäßen vernetzbaren Massen haben den Vorteil, daß sie in einem einfachen Verfahren unter Verwendung leicht zugänglicher Ausgangsstoffe hergestellt werden können.

Die erfindungsgemäßen vernetzbaren Massen haben den Vorteil, daß sie als einkomponentige Formulierung bei 25°C und Umgebungsdruck eine gute Lagerstabilität aufweisen und erst bei erhöhter Temperatur rasch vernetzen.

Die erfindungsgemäßen Siliconmassen haben den Vorteil, daß diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt (extrem lange Topfzeit) und erst bei erhöhter Temperatur rasch vernetzt.

Bei der Herstellung der erfindungsgemäßen vernetzbaren Massen ist es von großem Vorteil, daß sich der Platinkatalysator (D) leicht einarbeiten läßt.

Die erfindungsgemäßen Massen haben des weiteren den Vorteil, daß sich der Platinkatalysator (D) leicht und in guten Ausbeuten herstellen läßt.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und-bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.

Vi bedeutet Vinylrest, Me bedeutet Methylrest, Bu Butylrest und Ph bedeutet Phenylrest.

Herstellung der Platinkatalysatoren, auf die in den nachfolgenden Beispielen Bezug genommen wird:

### Katalysator 1

Eine Suspension von 0,400 g (0,51 mmol) cis-Bis-(triphenylphosphan)-platin(II)-chlorid, 0,150 g (1,21 mmol) 1-Ethinylcyclohexanol, 0,019 g Kupfer(I)iodid und 20 ml Diethylamin werden 10 Minuten gerührt. Anschließend wird die Mischung 30 Minuten unter Rückfluß erhitzt. Nach dem Abkühlen auf Raumtemperatur wird der Niederschlag von der Lösung abgetrennt und mit Ethanol gewaschen. Das erhaltene Produkt wird aus Methylenchlorid/Ethanol umkristallisiert und liefert 0,406 g oder eine 83%ige Ausbeute an Produkt. Basierend auf dem Herstellungsverfahren und den NMR-Spektren ist das Produkt ein Platin-Komplex der nachfolgenden Formel:

trans- (Ph₃P)₂Pt [-C≡CC₆H₁₀(OH)]₂

### Katalysator 2

Unter Stickstoffatmosphäre werden 2,0 g (1,61 mmol) Tetrakis(triphenylphosphan)platin(0) in 20 ml Diethylether suspendiert und mit 0,180 g (3,21 mmol) Propargylalkohol versetzt. Die Mischung wird über Nacht gerührt, anschließend wird das Lösungsmittel entfernt, der Rückstand in 5 ml Propargylalkohol suspendiert und 10 Minuten unter Rückfluß erhitzt. Nach dem Abkühlen auf Raumtemperatur wird die Lösung mit 10 ml Methanol überschichtet, wodurch allmählich ein beigefarbener Niederschlag ausfällt, der von der Lösung abgetrennt und aus Methylenchlorid/Methanol umkristallisiert wird. Man erhält 0,840 g (63% Ausbeute) eines farblosen Feststoffs. Basierend auf dem Herstellungsverfahren und den NMR-Spektren ist das Produkt ein Platin-Komplex der nachfolgenden Formel:

trans- (Ph₃P)₂Pt (-C≡C-CH₂OH)₂

### Katalysator 3

Die zur Herstellung von Katalysator 1 oben beschriebene Verfahrensweise wird wiederholt mit der Abänderung, daß anstelle des Ethinylcyclohexanols 0,124 g (1,21 mmol) Phenylacetylen verwendet werden. Das Produkt wird nicht umkristallisiert. Man erhält 0,424 g (91% Ausbeute) eines gelbfarbenen Pulvers. Basierend auf dem Herstellungsverfahren ist das Produkt ein Platin-Komplex der nachfolgenden Formel:

trans- (Ph₃P)₂Pt(-C≡C-Ph)₂

### Katalysator 4

Eine Suspension von 0,670 g (1,0 mmol) cis-Bis-(tri-n-butylphosphan)-platin(II)-chlorid, 0,225 g (2,2 mmol) Phenylacetylen, 0,010 g Kupfer(I)iodid und 10 ml Diethylamin wird 60 Minuten gerührt. Anschließend wird die Mischung 30 Minuten unter Rückfluß erhitzt. Nach dem Abkühlen auf Raumtemperatur wird der Niederschlag von der Lösung abgetrennt und mit Methanol gewaschen. Man erhält 0,640 g oder eine 80%ige Ausbeute an Produkt. Basierend auf dem Herstellungsverfahren und den NMR-Spektren ist das Produkt ein Platin-Komplex der nachfolgenden Formel:

trans- (n-Bu₃P)₂Pt (-C≡C-Ph)₂

### Katalysator 5

Die zur Herstellung von Katalysator 1 oben beschriebene Verfahrensweise wird wiederholt mit der Abänderung, daß anstelle des Ethinylcyclohexanols 0,120 g (1,21 mmol) Ethinyltrimethylsilan eingesetzt werden. Das Produkt wird mit Methanol gewaschen. Man erhält 0,390 g (84% Ausbeute) eines hellgelbfarbenen Pulvers. Basierend auf dem Herstellungsverfahren und den NMR-Spektren ist das Produkt ein Platin-Komplex der nachfolgenden Formel:

trans- (Ph₃P)₂Pt (-C≡C-SiMe₃)₂

### Beispiel 1

50,0 g eines Vinyldimethylsiloxy-terminierten Polydimethylsiloxans, das eine Viskosität von 20 Pa^{·}s aufweist, und 1,0 g SiH-Vernetzer werden mit Hilfe eines Rührers der Fa. Janke & Kunkel IKA-Labortechnik, TYP RE 162 homogen vermischt, wobei der SiH-Vernetzer ein Mischpolymerisat aus Dimethylsiloxy- und Methylhydrogensiloxy- und Trimethylsiloxy-Einheiten mit einer Viskosität von 330 mPa^{·}s und einem Gehalt an Si-gebundenem Wasserstoff von 0,46 Gew.-% ist. Anschließend werden 2,5 mg (das entspricht einem Gehalt von 10 ppm Pt bezogen auf die Gesamtmasse) Katalysator 1 - in 0,5 ml Methylenchlorid gelöst - eingerührt.

### Beispiel 2

Die in Beispiel 1 beschriebene Verfahrensweise wird wiederholt mit der Abänderung, daß vor der Katalysatorzugabe 3 mg Ethinylcyclohexanol homogen eingerührt werden.

### Beispiel 3

Die in Beispiel 2 beschriebene Verfahrensweise wird wiederholt mit der Abänderung, daß anstelle von 3 mg 30 mg Ethinylcyclohexanol. eingerührt werden.

### Beispiel 4

Die in Beispiel 2 beschriebene Verfahrensweise wird wiederholt mit der Abänderung, daß vor der Katalysatorzugabe 2,5 mg 2,5-Bis(tert.-butylperoxy)2,5-dimethylhexan (käuflich bei Aldrich GmbH & Co KG, Deutschland) eingerührt werden.

### Vergleichsbeispiel 1

Die in Beispiel 3 beschriebene Verfahrensweise wird wiederholt mit der Abänderung, daß als Katalystor 10 ppm Platin als Platin-Divinyltetramethyldisiloxan-Komplex in Vinyl-terminiertem Polydimethylsiloxan (käuflich bei ABCR GmbH & Co, Deutschland) verwendet werden.

### Beispiel 5

Die in Beispiel 3 beschriebene Verfahrensweise wird wiederholt mit der Abänderung, daß vor der Katalysatorzugabe 25 mg 2,5-Bis(tert.-butylperoxy)2,5-dimethylhexan (käuflich bei Aldrich GmbH & Co KG) eingerührt werden und als Katalysator 2,1 mg Katalysator 2 (entspricht einem Gehalt von 10 ppm Platin bezogen auf die gesamte Siliconmasse) eingearbeitet werden.

### Beispiel 6

In einem Laborkneter werden 255 Masseteile eines Vinyldimethylsiloxy-terminierten Polydimethylsiloxans mit einer Viskosität von 20 Pa·s vorgelegt, auf 150°C aufgeheizt und mit 180 Masseteilen einer hydrophoben pyrogenen Kieselsäure mit einer spezifischen Oberfläche nach BET von 300 m²/g und einem Kohlenstoffgehalt von 3,95 Gew.-% (käuflich erhältlich unter der Bezeichnung WACKER HDK® SKS 300 bei der Wacker-Chemie GmbH) versetzt. Es entsteht eine steife Masse, die anschließend mit 165 Masseteilen des obengenannten Polydimethylsiloxans verdünnt wird. Durch Kneten unter Vakuum (10 mbar) bei 150°C werden während einer Stunde flüchtige Bestandteile entfernt.

488,1 g dieser Grundmasse werden auf einer Walze bei einer Temperatur von 25°C mit 0,160 g Inhibitor, 10,95 g SiH-Vernetzer, 0,40 g Tetrakis(vinyldimethylsiloxy)silan und 2,0 g Katalysatorbatch zu einer homogenen Masse vermischt, wobei der Inhibitor Ethinylcyclohexanol ist, der SiH-Vernetzer ein Mischpolymerisat aus Dimethylsiloxy- und Methylhydrogensiloxy- und Trimethylsiloxy-Einheiten mit einer Viskosität von 320 mPa·s und einem Gehalt an Si-gebundenem Wasserstoff von 0,48 Gew.-% ist, und der Katalysatorbatch eine Mischung aus dem obengenannten Vinylpolydimethylsiloxan und Katalysator 1 (2,5 ppm Platin-Gehalt bezogen auf die gesamte Masse) ist.

### Vergleichsbeispiel 2

Die in Beispiel 6 beschriebene Verfahrensweise wird wiederholt mit der Abänderung, daß 8 ppm Platin als Platin-Divinyltetramethyldisiloxan-Komplex in Vinyl-terminierten Polydimethylsiloxan (käuflich bei ABCR GmbH & Co) verwendet werden.

### Beispiel 7

Die in Beispiel 3 beschriebene Verfahrensweise wird wiederholt mit der Abänderung, daß anstelle von Katalysator 1 2,1 mg (entspricht 10 ppm Platin) Katalysator 4 verwendet werden.

### Beispiel 8

Die in Beispiel 6 beschriebene Verfahrensweise wird wiederholt mit der Abänderung, daß anstelle von Katalysator 1 5 ppm Platin in Form von Katalysator 3 - in 0,5 ml Dichlormethan gelöst - verwendet werden.

### Beispiel 9

Die in Beispiel 6 beschriebene Verfahrensweise wird wieder mit der Abänderung, daß anstelle von Katalysator 1 5 ppm Platin in Form von Katalysator 5 - in 0,5 ml Dichlormethan gelöst - verwendet werden.

### Beispiel 10

589,4 Masseteile eines Vinyldimethylsiloxy-terminierten Polydimethylsiloxans, das eine Brabender-Platizität von 630 mkp, entsprechend einer mittleren Molmasse von ca. 500 000 g/mol (mittels NMR ermitteltes Zahlenmittel), aufweist, werden mit 252,6 Masseteilen einer hydrophoben pyrogenen Kieselsäure mit einer Oberfläche nach BET von 300 m²/g und einem Kohlenstoffgehalt von 3,95 Gew.-% (käuflich erhältlich unter der Bezeichnung WACKER HDK® SKS 300 bei der Wacker-Chemie GmbH), die in Portionen zudosiert wird, 4 Stunden in einem Kneter zu einer homogenen Masse vermischt.
500 g dieser Grundmasse werden auf einer Walze bei einer Temperatur von 20°C mit 0,02 g Inhibitor, 7,5 g SiH-Vernetzer und 12,4 mg Katalysator 1, in 1 ml Dichlormethan gelöst, zu einer homogenen Masse vermischt, wobei der Inhibitor Ethinylcyclohexanol ist, und der SiH-Vernetzer ein Mischpolymerisat aus Dimethylsiloxy- und Methylhydrogensiloxy- und Trimethylsiloxy-Einheiten mit einer Viskosität von 310 mPa-s und einem Gehalt an Si-gebundenem Wasserstoff von 0,46 Gew.-% ist.

### Beispiel 11

Die in Beispiel 10 beschriebene Arbeitsweise wird wiederholt mit der Abänderung, daß anstelle von Katalysator 1 12,0 mg Katalysator 3 verwendet werden.

### Beispiel 12

Die thermischen Härtungseigenschaften der in den Beispielen 1, 2, 3, 4, 5 und 7 sowie Vergleichsbeispiel 1 hergestellten Siliconmassen werden mit einem Dynamic Analyzer RDA II, der Fa. Rheometrics mit einer Aufheizkurve von 30 bis 200°C und mit einer Heizrate von 5°C/Minute gemessen. Zur quantitativen Ermittlung der Lagerbarkeit werden die hergestellten Formulierungen bei Raumtemperatur und 50°C gelagert, wobei die Zahl der Tage bis zur Verdopplung der Viskosität des Anfangswertes ermittelt wird. Die Meßergebnisse werden in Tabelle 1 dargestellt.

Die thermischen Härtungseigenschaften der Siliconmassen gemäß den Beispielen 6, 8, 9, 10 und 11 sowie Vergleichsbeispiel 2 werden mit einem Goettfert-Elastograph gemessen. Zur quantitativen Ermittlung der Lagerbarkeit werden die hergestellten Formulierungen bei Raumtemperatur und 50°C gelagert, wobei die Zahl der Tage bis zur Verdopplung der Viskosität des Anfangswertes ermittelt wird. Die Meßergebnisse werden in Tabelle 2 dargestellt.

**Tabelle 1**

| | Bsp. 1 | Bsp. 2 | Bsp. 3 | Bsp. 4 | Vbsp.1 | Bsp. 5 | Bsp. 7 |
|---|---|---|---|---|---|---|---|
| a_{T}*'*[°C] | 136,8 | 141,3 | 150,0 | 141,5 | 95,4 | 143,7 | 151,7 |
| t*'*(a_{T}*'*) [min] | 21,36 | 22,26 | 24,00 | 22,30 | 13,08 | 22,74 | 24,34 |
| t₇₅*'*[min] | 24,94 | 27,58 | 27,58 | 24,82 | 16,81 | 24,90 | 27,60 |
| Lagerung bei RT | >191 d | >267 d | >267 d | >334 d | 12 d | 281 d | >186 d |
| Lagerung bei 50°C | 43 d | 65 d | 176 d | 74 d | 1 d | - | >186 d |

Legende für Tabelle 1:
- d: Tage
- min: Minuten
- s: Sekunden
- a_{T}': Anspringtemperatur
- t' (a_{T}'): Zeit, bis die Vernetzung beginnt
- t₇₅': Zeit, bis 75% des maximalen Drehmoments erreicht werden

**Tabelle 2**

| | Bsp. 6 | Vbsp. 2 | Bsp. 8 | Bsp. 9 | Bsp. 10 | Bsp. 11 |
|---|---|---|---|---|---|---|
| a_{T} [°C] | 150,3 | 115,8 | 155,7 | 152,0 | 131,6 | 137,2 |
| t₉₀ [s] | 66 | 29 | 88 | 69 | 55 | 62 |
| Lagerung bei RT | >180 d | 15 d | >180 d | 146 d | >109 d | >109 |
| Lagerung bei 50°C | 89 d | 3 d | 94 d | 37 d | 63 d | 67 d |

Legende für Tabelle 2:
- d: Tage
- min: Minuten
- s: Sekunden
- a_{T}: Anspringtemperatur; sie wird mit einer Heizrate von 10°C/min bestimmt. Die Temperatur, die dem 4%-Wert des maximalen Drehmoments entspricht, wird als Anspringtemperatur bestimmt.
- t₉₀: Die Bestimmung des t₉₀-Wertes erfolgt nach DIN 53529 T3. Die Dauer vom Beginn der Härtung bis 90% (t₉₀-Wert) des maximalen Drehmoments wird bei 180°C ermittelt.

## Patentansprüche

1. Härtbare Organopolysiloxanmassen, enthaltend
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die SiC-gebundene Reste mit aliphatischen Kohlenstoff-Kohlenstoff-Mehrfachbindungen und Si-gebundene Wasserstoffatome aufweisen, und
(D) Platinkatalysator, ausgewählt aus der Gruppe bestehend aus
(PR² ₃)₂Pt(-C≡C-R³)₂ (III),
(R² ₂P-R⁴-PR² ₂)Pt(-C≡C-R³)₂ (IV)
und
H-C≡C-R⁵-C≡C-[-Pt(PR² ₃)₂-C≡C-R⁵-C≡C-]ₑ-H (V),
wobei
R² gleich oder verschieden sein kann und einwertige, gegebenenfalls substituierte Kohlenwasserstoffreste mit 1 bis 24 Kohlenstoffatomen, Halogenatome, Wasserstoffatom, Hydroxyreste, -CN oder -SCN bedeutet, die entweder direkt oder über Sauerstoff, Stickstoff oder Schwefel an Phosphor gebunden sind,
R³ gleiche oder verschiedene einwertige, gegebenenfalls substituierte Kohlenwasserstoffreste mit 1 bis 24 Kohlenstoffatomen,
R⁴ gleiche oder verschiedene zweiwertige, gegebenenfalls substituierte Kohlenwasserstoffreste mit 1 bis 14 Kohlenstoffatomen,
R⁵ gleiche oder verschiedene zweiwertige, gegebenenfalls substituierte Kohlenwasserstoffreste mit 1 bis 24 Kohlenstoffatomen und
e eine ganze Zahl größer oder gleich 1 bedeutet.

2. Härtbare Organopolysiloxanmassen gemäß Anspruch 1, dadurch gekennzeichnet, daß es sich bei Bestandteil (A) um eine aliphatisch ungesättigte Organosiliciumverbindung handelt.

3. Härtbare Organopolysiloxanmassen gemäß Anspruch 1 oder 2, dadurch gekennzeichnet, daß als Organosiliciumverbindung (A), lineare oder verzweigte Organopolysiloxane aus Einheiten der Formel
RₐR¹ _{b}SiO_{(4-a-b)/2} (I)
eingesetzt werden, wobei
R gleich oder verschieden sein kann und einen einwertigen, von aliphatischen Kohlenstoff-Kohlenstoff-Mehrfachbindungen freien, organischen Rest,
R¹ gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder 2 ist
mit der Maßgabe, daß die Summe a + b kleiner oder gleich 3 ist und mindestens 2 Reste R¹ je Molekül vorliegen.

4. Härtbare Organopolysiloxanmassen gemäß einem oder mehreren der Ansprüche 1 bis 3, dadurch gekennzeichnet, daß es sich bei Rest R um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen handelt.

5. Härtbare Organopolysiloxanmassen gemäß einem oder mehreren der Ansprüche 1 bis 4, dadurch gekennzeichnet, daß als Organopolysiloxane (B) lineare, cyclische oder verzweigte Organopolysiloxane aus Einheiten der Formel
R_{c}H_{d}SiO_{(4-c-d)/2} (II)
eingesetzt werden, wobei
R gleich oder verschieden sein kann und die oben angegebene Bedeutung hat,
c 0, 1, 2 oder 3 ist und
d 0, 1 oder 2 ist,
mit der Maßgabe, daß die Summe von c + d kleiner oder gleich 3 ist und mindestens zwei Si-gebundene Wasserstoffatome je Molekül vorliegen.

6. Härtbare Organopolysiloxanmassen gemäß einem oder mehreren der Ansprüche 1 bis 5, dadurch gekennzeichnet, daß als Katalysator (D) Bis(alkinyl)bis(triphenylphosphan)platinkomplexe eingesetzt werden.

7. Formkörper hergestellt durch Vernetzung der erfindungsgemäßen Massen gemäß einem oder mehreren der Ansprüche 1 bis 6.

## Claims

1. Curable organopolysiloxane compositions comprising
(A) compounds having radicals containing aliphatic carbon-carbon multiple bonds,
(B) organopolysiloxanes containing Si-bonded hydrogen atoms, or, in place of (A) and (B),
(C) organopolysiloxanes having SiC-bonded radicals containing aliphatic carbon-carbon multiple bonds and Si-bonded hydrogen atoms, and
(D) a platinum catalyst selected from the group consisting of
(PR² ₃)₂Pt(-C≡C-R³)₂ (III),
(R² ₂P-R⁴-PR² ₂)Pt(-C≡C-R³)₂ (IV)
and
H-C≡C-R⁵-C≡C-[-Pt(PR² ₃)₂-C≡C-R⁵-C≡C-]ₑ-H (V)
where
R² may be identical or different and are monovalent, substituted or unsubstituted hydrocarbon radicals having from 1 to 24 carbon atoms, halogen atoms, hydrogen atoms, hydroxy radicals, -CN or -SCN, which are bound to phosphorus either directly or via oxygen, nitrogen or sulfur,
R³ are identical or different monovalent, substituted or unsubstituted hydrocarbon radicals having from 1 to 24 carbon atoms,
R⁴ are identical or different divalent, substituted or unsubstituted hydrocarbon radicals having from 1 to 14 carbon atoms,
R⁵ are identical or different divalent, substituted or unsubstituted hydrocarbon radicals having from 1 to 24 carbon atoms, and
e is an integer greater than or equal to 1.

2. Curable organopolysiloxane compositions according to claim 1, characterized in that constituent (A) is an aliphatically unsaturated organosilicon compound.

3. Curable organopolysiloxane composition according to claim 1 or 2, characterized ins that the organosilicon compounds (A) used are linear or branched organopolysiloxanes comprising units of the formula
RₐR¹ _{b}SiO_{(4-a-b)/2} (I)
where
R may be identical or different and are each a monovalent organic radical which is free of aliphatic carbon-carbon multiple bonds,
R¹ may be identical or different and are each a monovalent, substituted or unsubstituted, SiC-bonded hydrocarbon radical containing aliphatic carbon-carbon multiple bonds,
a is 0, 1, 2 or 3 and
b is 0, 1 or 2,
with the proviso that the sum a + b is less than or equal to 3 and at least two radicals R¹ are present per molecule.

4. Curable organopolysiloxane compositions according to one or more of Claims 1 to 3, characterized in that the radical R is a monovalent, SiC-bonded hydrocarbon radical which is free of aliphatic carbon-carbon multiple bonds and has from 1 to 6 carbon atoms.

5. Curable organopolysiloxane compositions according to one or more of Claims 1 to 4, characterized in that the organopolysiloxanes (B) used are linear, cyclic or branched organopolysiloxanes comprising units of the formula
R_{c}H_{d}SiO_{(4-c-d)/2} (II)
where
R may be identical or different and are as defined above,
c is 0, 1, 2 or 3 and
d is 0, 1 or 2,
with the proviso that the sum of c + d is less than or equal to 3 and at least two Si-bonded hydrogen atoms are present per molecule.

6. Curable organopolysiloxane compositions according to one or more of Claims 1 to 5, characterized in that the catalyst (D) used comprises bis(alkynyl)bis-(triphenylphosphine)platinum complexes.

7. Moldings produced by crosslinking the compositions according to one or more of Claims 1 to 6.

## Revendications

1. Masses d'organopolysiloxane durcissables, contenant
(A) des composés qui présentent des radicaux contenant des liaisons multiples aliphatiques carbone-carbone,
(B) des organopolysiloxanes contenant des atomes d'hydrogène liés par Si ou, au lieu de (A) et de (B),
(C) des organopolysiloxanes qui présentent des radicaux liés par SiC, avec des liaisons multiples aliphatiques carbone-carbone et des atomes d'hydrogène liés par Si, et
(D) un catalyseur de platine, choisi parmi le groupe constitué par
(PR² ₃)₂Pt(-C≡C-R³)₂ (III),
(R² ₂P-R⁴-PR² ₂)Pt(-C≡C-R³)₂ (IV)
et
H-C≡C-R⁵-C≡C-[-Pt(PR² ₃)₂-C≡C-R⁵-C≡C-]ₑ-H (V)
où
R² peut être identique ou différent et signifie des radicaux hydrocarbonés monovalents, le cas échéant substitués, comprenant 1 à 24 atomes de carbone, des atomes d'halogène, un atome d'hydrogène, des radicaux hydroxy, un groupement -CN ou -SCN, qui sont liés soit directement soit via de l'oxygène, de l'azote ou du soufre au phosphore,
R³ signifie des radicaux hydrocarbonés identiques ou différents, monovalents, le cas échéant substitués, comprenant 1 à 24 atomes de carbone,
R⁴ signifie des radicaux hydrocarbonés identiques ou différents, divalents, le cas échéant substitués, comprenant 1 à 14 atomes de carbone,
R⁵ signifie des radicaux hydrocarbonés identiques ou différents, divalents, le cas échéant substitués, comprenant 1 à 24 atomes de carbone,
e signifie un nombre entier supérieur ou égal à 1.

2. Masses d'organopolysiloxane durcissables selon la revendication 1, caractérisées en ce qu'il s'agit, pour le composant (A), d'un composé organosilicié aliphatiquement insaturé.

3. Masses d'organopolysiloxane durcissables selon la revendication 1 ou 2, caractérisées en ce qu'on utilise comme composé organosilicié (A) des organopolysiloxanes linéaires ou ramifiés constitués d'unités de formule
RₐR¹ _{b}SiO_{(4-a-b)/2} (I)
où
R peut être identique ou différent et signifie un radical monovalent, exempt de liaisons multiples aliphatiques carbone-carbone,
R¹ peut être identique ou différent et signifie un radical hydrocarboné monovalent, le cas échéant substitué, lié par SiC, comprenant une liaison multiple aliphatique carbone-carbone,
a signifie 0, 1, 2 ou 3 et
b signifie 0, 1 ou 2,
sous réserve que la somme a+b soit inférieure ou égale à 3 et qu'au moins deux radicaux R¹ soient présents par molécule.

4. Masses d'organopolysiloxane durcissables selon l'une ou plusieurs des revendications 1 à 3, caractérisées en ce qu'il s'agit, pour le radical R, d'un radical hydrocarboné monovalent, exempt de liaisons multiples aliphatiques carbone-carbone, lié par SiC, comprenant 1 à 6 atomes de carbone.

5. Masses d'organopolysiloxane durcissables selon l'une ou plusieurs des revendications 1 à 4, caractérisées en ce qu'on utilise, comme organopolysiloxanes (B), des organopolysiloxanes linéaires, cycliques ou ramifiés constitués d'unités de formule
R_{c}H_{d}SiO_{(4-c-d)/2} (II)
où
R peut être identique ou différent et présente la signification indiquée ci-dessus,
c signifie 0, 1, 2 ou 3 et
d signifie 0, 1 ou 2,
sous réserve que la somme c+d soit inférieure ou égale à 3 et qu'au moins deux atomes d'hydrogène liés par Si soient présents par molécule.

6. Masses d'organopolysiloxane durcissables selon l'une ou plusieurs des revendications 1 à 5, caractérisées en ce qu'on utilise comme catalyseur (D) des complexes de bis(alkinyl)bis(triphénylphosphane) platine.

7. Corps moulés préparés par réticulation des masses selon l'invention selon l'une ou plusieurs des revendications 1 à 6.
